Europäisches Patentamt

(19) European Patent Office

Office européen des brevets

(11) Numéro de publication: **0 067 088**
**B1**

(12) # FASCICULE DE BREVET EUROPEEN

(45) Date de publication du fascicule du brevet:
**27.12.85**

(51) Int. Cl.⁴: **E 04 B 1/94,** E 04 D 13/16,
E 04 B 1/76, B 32 B 19/06

(21) Numéro de dépôt: **82400870.0**

(22) Date de dépôt: **11.05.82**

(54) **Nappe de matière isolante, en particulier feutre de fibres minérales, comportant un parement collé, et procédé pour son obtention.**

(30) Priorité: **11.05.81 DE 3118597**

(43) Date de publication de la demande:
**15.12.82 Bulletin 82/50**

(45) Mention de la délivrance du brevet:
**27.12.85 Bulletin 85/52**

(84) Etats contractants désignés:
**AT BE CH DE FR GB IT LI LU NL SE**

(56) Documents cités:
**DE - U - 7 830 852**
**DE - U - 7 920 480**
**FR - A - 2 136 113**
**US - A - 3 140 220**
**US - A - 3 307 306**

(73) Titulaire: **ISOVER SAINT-GOBAIN, Les
Miroirs 18, avenue d'Alsace, F-92400 Courbevoie (FR)**

(84) Etats contractants désignés: **BE CH FR GB IT LI LU NL
SE AT**

(73) Titulaire: **Grünzweig + Hartmann und Glasfaser AG,
Bürgermeister-Grünzweig-Strasse 1-47,
D-6700 Ludwigshafen am Rhein (DE)**

(84) Etats contractants désignés: **DE**

(72) Inventeur: **Spittler, Gerhard, Schillerstrasse 60,
D-6700 Ludwigshafen (DE)**

(74) Mandataire: **Leconte, Jean-Gérard, Saint-Gobain
Recherche 39, Quai Lucien Lefranc,
F-93304 Aubervilliers Cedex (FR)**

BUNDESDRUCKEREI BERLIN

## Description

La présente invention concerne une nappe de matière isolante, en particulier en feutre de fibres minérales, comportant un parement collé à titre de couche d'arrêt et de moyen de fixation de la nappe à des éléments de délimitation de rives, comme des chevrons de combles entre lesquels la couche de matière isolante peut être installée sous pression latérale, une coupure au moins étant ménagée, chez le fabricant, dans la zone de rive latérale de la couche de matière isolante, parallèlement à la rive et sans entailler le parement, afin de former une bande de rive modulaire facile à enlever pour adapter la largeur de la couche de matière isolante aux exigences particulières de l'installation. L'invention a trait également à un prodédé de fabrication d'une telle nappe de matière isolante.

De telles nappes de matière isolante sont connues en diverses configurations. Une nappe de matière isolante, qui s'est très largement répandue, possède une couche de matière isolante faite de laine de verre liée et est revêtue d'une feuille mince d'aluminium de parement. La feuille mince d'aluminium se comporte comme une barrière arrêtant la vapeur d'eau et sert à fixer la nappe de matière isolante par exemple entre des chevrons de combles, des bandes de lisière du parement qui dépassent latéralement de la couche de matière isolante pouvant à cet effet être clouées à la face de chant du chevron tournée vers l'intérieur.

Une difficulté sous ce rapport réside dans le fait que les nappes de matière isolante ne sont en général fabriquées et livrées qu'en des largeurs nominales déterminées de, par exemple, 500, 600, 700, 800 et 100 mm alors que la largeur entre les éléments de délimitation de rives, par exemple de chevrons de combles, varie et présente des valeurs intermédiaires. C'est pour cette raison que de telles nappes de matière isolante doivent souvent être coupées à dimension sur le lieu du montage selon les nécessités de l'installation à réaliser, ce qui exige relativement beaucoup de main d'oeuvre car une bande de rive latérale de la couche de matière isolante doit être coupée à la main de la nappe de matière isolante dont la largeur d'origine est trop grande. Dans la pratique, on évite naturellement ce travail supplémentaire dans toute la mesure du possible avec pour conséquence que l'on installe ou pose la nappe de matière isolante non seulement avec l'excès de largeur idéal d'environ 50 mm mais aussi avec un excès de par exemple 80 mm ou encore davantage. De telles nappes de matière isolante installées sans grands soins ne peuvent cependant pas remplir leur fonction de manière satisfaisante car des ponts thermiques peuvent apparaître que provoquent le cambrage, le plissage ou l'écrasement des lisières du parement de sorte que celles-ci n'assurent plus l'étanchéité à l'air et, dans son ensemble, une telle installation incorrecte doit être qualifiée sans ambiguïté de défectueuse.

Le modèle d'utilité allemand 7 830 852 décrit une nappe de matière isolante du type spécifié dont les zones de rives présentent des coupures relativement larges espacées par exemple de 10 en 10 mm, qui délimitent entre elles des nervures de matière isolante correspondantes. Les coupures s'étendent sur une partie de la hauteur de la couche de matière isolante et, dans la zone des coupures, le parement formant la barrière à la vapeur d'eau n'est pas collé mais recouvre la couche de matière isolante librement sans y être attaché. Il est ainsi possible de soulever le parement de la zone de rive et de rompre une bande de rive de la couche de matière isolante au niveau d'une coupure adéquate de telle sorte que cette couche de matière isolante ait la largeur souhitée.

L'inconvénient dans ce cas est que le grand nombre de coupures relativement larges en forme de rainures réduit inévitablement le pouvoir calorifuge de la couche de matière isolante dans ses zones de rive, ce qui est d'autant plus marqué que le nombre de nervures latérales de matière isolante qu'il faut rompre pour chaque cas d'installation particulier est petit; dans le cas d'une largeur de la couche de matière isolante qui est adéquate d'origine, toutes les coupures en forme de rainures sont conservées et le pouvoir calorifuge dans les zones de rive de la couche de matière isolante diminue fortement de manière correspondante. De plus, les nervures de matière isolante entre les coupures peuvent aussi être facilement détériorées ou même rompues par mégarde car elles ne sont reliées les unes aux autres que par l'intermédiaire d'une mince lame de matière calorifuge dans le fond des coupures. Finalement, les coupures en forme de rainures doivent bien entendu être formées dans la couche de matière isolante par des outils de sciage ou de fraisage correspondants, donc par une opération produisant beaucoup de déchets qui, d'une part entraîne une perte de matière relativement importante et, d'autre part, implique des frais supplémentaires pour l'élimination des déchets. Il en est ainsi surtout lorsque les coupures en forme de rainures ont une largeur relativement grande pour fournir une réserve d'élasticité suffisante pour permettre un refoulement des rives même dans le cas d'une matière faiblement compressible comme de la mousse dure.

Cela étant, l'invention a pour but de procurer une nappe de matière isolante du type esquissé dans le premier paragraphe du présent mémoire ainsi qu'un procédé de fabrication de cette nappe qui, dans la mesure où les bandes de rive modulaires prévues dans le cas présent ne doivent pas être enlevées pour l'installation ou la pose, ne présente aucune différence fonctionnelle par rapport à une nappe de matière isolante sans coupures et qui, du point de vue technique n'implique, à la fabrication, qu'un minimum de frais supplémentaires par rapport à une nappe de matière isolante sans coupures.

Ce but est réalisé du point de vue technique comme décrit dans la caractéristique de la revendication 1 en ce qui concerne le dispositif et dans la caractéristique de la revendication 4 en ce qui concerne le procédé.

Etant donné que chaque coupure s'étend sur toute la hauteur de la couche de matière isolante, elle peut être produite sans difficultés au cours de la fabrication de la couche de matière isolante, avant l'application du parement, par un simple sectionnement complet de la matière isolante. Par le fait que la nappe de parement est pourvue d'une couche d'adhésif également dans la zone des bandes de rive ainsi coupées, les bandes de rive de même que la zone médiane non coupée de la couche de matière isolante, sont bien maintenues sur le parement et sont protégées par celui-ci. Etant donné que les faces de coupe sont juxtaposées l'une contre l'autre, une telle nappe de matière isolante ne présente initialement aucune différence, quant à son aspect extérieur ou à son pouvoir calorifuge, par rapport à une nappe de matière isolante sans coupures, car les coupures sont largement invisibles et ne se manifestent pas fonctionnellement.

On peut en outre tirer profit dans ce cas de la situation selon laquelle, après la coupe, les faces de coupe de la couche de matière isolante ramenées le cas échéant l'une contre l'autre sous l'effet d'une pression latérale, adhèrent l'une pression latérale, adhèrent l'une à l'autre en substance par imbrication ou agrippage. Chaque bande de rive adhère ainsi aussi bien du côté du parement, sur la couche d'adhésif présente à cet endroit, qu'au niveau des faces de coupe par un effet d'adhérence réciproque, de sorte que la coupure ne bâille pas même lors des manipulations habituelles de la nappe de matière isolante. Ce n'est que lorsque la couche de matière isolante subit une certaine flexion au niveau de la coupure que l'adhérence cède et que la coupure bâille, la bande de rive pouvant être alors détachée du parement à la main ou à l'aide d'un couteau ou d'un outil analogue sans qu'une opération de coupe soit nécessaire à cet effet.

Le nombre de coupures dans chaque zone de rive dépend d'une part de la valeur tolérable de l'exès de largeur lors de la pose ou de l'installation et d'autre part de la gradation de la largeur nominale des nappes de matière isolante. On peut utiliser dans ce cas une dimension de module ou de subdivision différente pour la largeur modulaire des bandes de rive dans les deux zones de rive de la nappe de matière isolante, afin de parvenir à un nombre adéquat de largeurs intermédiaires. Dans le cas d'une couche de matière isolante à base de laine minérale ou de matière analogue qui est relativement bien compressible, une largeur modulaire d'une bande de rive de 50 mm suffit en règle générale lorsque la gradation des largeurs nominales est proche de 100 mm car une compression de 50 mm dans le sens de la largeur lors de la pose ou de l'installation peut être absorbée par la matière. Il est préférable en particulier de prévoir d'un côté une bande de rive de 50 mm et de l'autre côté une telle bande de rive de 100 mm de largeur de telle sorte que la largeur de la couche de matière isolante puisse être réduite, sans opération de coupe, de 50, 100 et 150 mm et que la gradation entre des largeurs nominales successives puisse par conséquent être portée à 200 mm, ce qui en raison d'un plus petit nombre de types différents, offre des avantages considérables pour la production lors de l'entreposage.

Les coupures peuvent être pratiquées au cours de la fabrication normale de la nappe de matière isolante, d'une manière très simple par des outils de coupe supplémentaires qui peuvent travailler en compagnie d'autres outils de coupe destinés à produire des nappes partielles, à effectuer le rognage ou à exécuter des opérations analogues. Par la suite, les bandes de rive coupées peuvent être à nouveau appliquées à la zone de coupe d'une manière très simple par des tôles de guidage latérales ou des organes analogues de sorte que la formation des coupures ne provoque aucune perturbation perceptible du déroulement des opérations de fabrication.

Dans le brevet des Etats-Unis d'Amérique n° 3 964 232, des coupures qui s'étendent sur toute la hauteur de la couche de matière isolante sont ménagées dans de telles nappes de matière isolante. Cependant, ces coupures traversent également la nappe de parement et ne servent pas à produire des bandes de rive modulaires amovibles mais des lignes de perforations transversales à la longueur de la nappe de matière isolante pour qu'on poisse arracher d'une manière simple, en ces endroits d'arrachement préétablis, des segments longitudinaux de la nappe de matière isolante. De même, dans le modèle d'utilité allemand n° 7 920 480, de telles coupures à perforations sont ménagées dans une plaque de fibres minérales de poids spécifique élevé afin de pouvoir rompre les parties de la plaque limitées par ces perforations et les utiliser isolément.

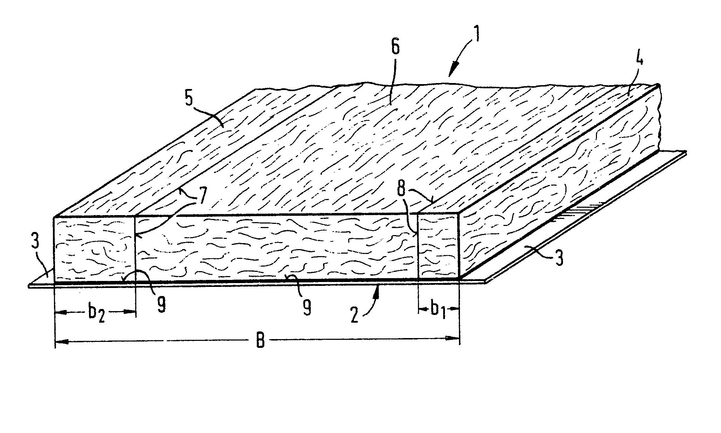

D'autres particularités, caractéristiques et avantages de l'invention ressortiront de la description suivante d'une forme d'exécution, donnée à titre d'exemple, avec référence au dessin annexé.

La figure du dessin est une vue en perspective fragmentaire d'une nappe de matière isolante conforme à l'invention, garnie d'un parement.

La nappe de matière isolante représentée au dessin comporte une couche de matière isolante 1 et une nappe de parement 2 collée sur une face de la couche de matière isolante 1. La nappe de parement 2 peut par exemple être du papier kraft, mais il s'agit cependant de préférence d'une feuille de métal mince, telle qu'une feuille d'aluminium mince, le cas échéant avec une couche de renforcement, comme décrit dans la demande de brevet allemand publiée AS 3 013 223, à laquelle on se référera pour obtenir d'autres détails sur ce point. La couche de matière isolante 1 peut essentiellement être faite de

**0 067 088**

n'importe quelle matière isolante adéquate, des matières isolantes à compressibilité relativement élevée, en particulier du feutre de matières minérales ou de la laine minérale, étant cependant les matières préférées.

La nappe de matière isolante est appliquée, dans la position représentée, par en dessous sur des chevrons voisins ou des éléments analogues, d'une manière telle que la nappe de parement 2 vienne se placer par les bandes de lisières latérales dépassantes 3 contre la face de chant des chevrons tournée vers l'intérieur et puisse y être fixée au moyen de crampons ou d'organes analogues tandis que la couche de matière isolante 1 peut être pressée entre les faces latérales des chevrons. La couche de matière isolante a dans ce cas, avant la pose ou l'installation, donc dans la situation représentée sur le dessin, une largeur B qui est supérieure d'environ 20 à 50 mm à la distance libre entre des chevrons voisins ou entre d'autres éléments de délimitation des rives, ce qui, moyennant une faible compression dans le sens de la largeur B, permet d'obtenir la pression de contact latérale souhaitée.

Comme on peut s'en rendre compte immédiatement, de telles nappes de matière isolante ne peuvent être fabriquées qu'en des largeurs nominales distinctes déterminées, avec des gradations de 100 mm. Entre 500 et 1000 mm; une gradations suffisamment faible de la largeur nominale pour donner une largeur s'adaptant encore à chaque cas d'application, entraînerait des frais de fabrication et d'entreposage trop élevés. Pour obtenir une adaption à des largeurs de pose ou d'installation comprises entre les largeurs nominales, sans devoir couper la couche de matière isolante 1 à la largeur B souhaitée, la couche de matière isolante 1 est pourvue de bandes de rive 4 et 5 qui sont séparées de la zone médiane 6 de la couche de matière isolante 1 par des coupures 7 et 8. Ces bandes de rive modulaires 4 et 5 peuvent être arrachées sélectivement en cas de nécessité, comme expliqué ci-après encore avec plus de détail, afin de réduire ainsi, sans opération de coupe, la largeur d'installation de la couche de matière isolante 1 à une mesure qui n'entraîne pas une trop forte compression de la matière isolante 1 pour un écartement donné des chevrons ou des éléments analogues.

Une couche d'adhésif 9 prévue entre la nappe de parement 2 et la couche de matière isolante 1 s'étend sur toute la largeur de la couche de matière isolante 1 y compris les bandes de rive 4 et 5, de sorte que ces bandes sont également fixées à la nappe de parement 2. Il va de soi que la couche d'adhésif 9 ne doit pas nécessairement être appliquée sur toute la surface mais qu'elle peut également être appliquée par exemple en des bandes distinctes et isolées, mais il est essentiel que l'adhésivité correspondante soit également présente au niveau des bandes de rive 4 et 5. De plus, les coupures 7 et 8 sont des coupures fermées de sorte que les bandes de rive 4 et 5 sont appliquées contre la zone médiane 6 de la couche de matière isolante, sans interstices. Dans les coupures 7 et 8 on obtient également un contact réciproque de la matière de la couche isolante 1 qui, par un effet d'agrippage, assure une certaine adhérence dans la zone des faces de coupe de sorte que les bandes de rive 4 et 5 ne sont pas béantes lors d'un soutien défectueux de la nappe de matière isolante. Cependant lorsque l'on décide par exemple d'enlever la bande de rive 4, on peut plier la nappe de parement 2 volontairement à la main dans la zone de la coupure 8 de telle sorte que la suppression de l'effet d'adhérence de la matière dans la coupure 8 forme une fente béante à cet endroit dans la couche de matière isolante 1. On peut alors enlever la bande de rive 4 de la nappe de parement 2 à la main ou au moyen d'un outil plat, comme un couteau, une truelle ou un outil analogue inséré entre la bande de rive 4 et le côté voisin de la nappe de parement 2. La couche de matière isolante 1 a alors une largeur réduite de manière correspondante, tandis que la bande de lisière associée 3 est élargie de manière correspondante, si elle n'a pas déjà été prévue au moment de l'application du parement, dans une position rabattue de 180°. Selon les données locales, on peut laisser les bandes de lisières 3 dans l'état rabattu ou les déployer latéralement.

On peut par exemple utiliser un feutre de fibres minérales, comme de la laine de verre, pour former la couche de matière isolante. Dans un tel cas, il s'est avéré adéquat de réaliser une des bandes de rive 4 ou 5, dans ce cas-ci la bande 4, en une largeur $b_1$ de 50 mm et la bande de rive 5 se trouvant de l'autre côté en une largeur $b_2$ de 10 mm. Ceci permet une diminution de la largeur nominale B par échelons de 50 mm jusqu'à un maximum de 150 mm. On peut de cette façon prévoir une gradation de 200 mm entre les largeurs nominales B des nappes de matière isolante préfabriquées et on dispose toutefois sur le chantier une gradation de 50 mm par enlèvement de la bande de rive 4 ou 5 correspondante. Une gradation de 50 mm s'est avérée suffisante dans le cas du feutre de fibres minérales car la couche de matière isolante 1 peut être comprimée latéralement sans inconvénient fonctionnel jusqu'à un peu plus de 50 mm. La suppression de largeurs nominales intermédiaires correspondantes exige certes dans des cas déterminés la fabrication d'une nappe de matière isolante d'une largeur nominale supérieure à la dimension effectivement nécessaire mais cela permet d'éviter une opération de découpe fastidieuse des nappes de matière isolante et entraîne en particulier une diminution des frais d'entreposage par suite du nombre réduit de largeurs nominales. Les bandes de rive détachées peuvent en outre avantageusement être utilisées pour les isolations d'obturation ou de bouchage que l'on rencontre dans les travaux d'isolation.

Bien entendu, plusieurs coupures 7 ou 8 peuvent être prévues aussi dans chaque zone de rive de la couche de matière isolante 1, à des distances modulaires réciproques de par exemple 25 mm, pour obtenir aussi en fonction de la compressibilité de la couche de matière isolante 1, le cas échéant des largeurs intermédiaires souhaitées.

Lors de la fabrication de la nappe de matière isolante, les frais supplémentaires dus à la formation des coupures 7 et 8 peuvent être maintenus faibles car le sectionnement pour former les coupures 7 et 8 s'effectue en même temps que la production de nappes partielles et les bandes de rive peuvent être appliquées aussitôt à nouveau contre la zone médiane 6 par exemple par des tôles de guidage latérales. Une fixation réciproque finale de la position des bandes de rive 4 et 5 ainsi que la zone médiane 6 se produit alors dans le poste d'application du parement où la nappe de parement 2 revêtue de la couche d'adhésif 9 est appliquée contre la couche de matière isolante 1 et fixe toutes les bandes individuelles au moyen de l'adhésif. Dans le cas d'une couche de matière isolante 1 en laine de verre ou en matière analogue, on utilise avantageusement un jet d'eau sous haute pression pour former les coupures 7 ou 8 et ce jet provoque une certaine humidification des faces de coupe ce qui améliore l'adhérence réciproque après le rétablissement du contact. Cette adhérence est due, dans le cas de la laine minérale, à une sorte d'agrippage réciproque des fibres minérales dans la zone de l'endroit de coupe. Les frais supplémentaires peuvent être maintenus très faibles puisque sans cela, des outils de coupe correspondants comme des ajutages à jets d'eau ou des scies, seraient nécessaires pour rogner la couche de fibres minérales en forme de nappe sur la chaîne de production, ainsi que pour la diviser le cas échéant en nappes de la largeur nominale souhatiée, de sorte qu'il suffit, pour former les coupures 7 et 8, d'incorporer par exemple quelques ajutages d'eau supplémentaires à l'installation de rognage ou de sectionnement, tandis que la remise en contact des bandes de rive 4 et 5 et de la zone médiane peut s'effectuer trés simplement à l'aide des tôles de guidage correspondantes prévues aux bords extérieurs des nappes formées.

Etant donné que les coupures 7 et 8 après leur formation sont aussitôt complètement refermées, elles sont à peine visibles sur le produit terminé et ne se manifestent pas non plus, en particulier du point de vue fonctionnel, par exemple par une chute de l'efficacité d'isolation thermique ou par un défaut analogue. En de qui concerne la manutention des nappes de matière isolante lors du montage, aucune différence fondamentale n'apparaît par rapport à des nappes de matière isolante sans coupure, bien qu'il soit en outre possible d'enlever simplement et rapidement les bandes de rive 4 et 5, au choix.

## Revendications

1. Nappe de matière isolante, en particulier en feutre de fibres minérales, comportant un parement collé à titre de couche d'arrêt (2) et de moyen de fixation de la nappe à des éléments de délimitation de rive, comme des chevrons de combles, entre lesquels la couche de matière isolante (1) peut être installée sous pression latérale, une coupure (7 ou 8) au moins étant ménagée, chez le fabricant, dans la zone de rive latérale de la couche de matière isolante, parallèlement à la rive et sans entailler le parement, afin de former une bande de rive modulaire (4 ou 5) facile à enlever pour adapter la largeur de la couche de matière isolante (1) aux exigences particulières de l'installation, caractérisée en ce que la coupure (7 ou 8) s'étend sur toute la hauteur de la couche de matière isolante (1), les faces de coupe de la coupure (7 ou 8) sont juxtaposées l'une contre l'autre et la couche d'adhésif (9) entre la nappe de parement (2) et la couche de matière isolante (1) est aussi prévue sur la bande de rive (4 ou 5) séparée par la coupure (7 ou 8).

2. Nappe de matière isolante suivant la revendication 1, caractérisée en ce que les bandes de rive (4 et 5) formées par des coupures (7, 8) situées des deux côtés présentent des largeurs modulaires ($b_1$, $b_2$) différentes dans les deux zones de rive de la couche de matière isolante (1).

3. Nappe de matière isolante suivant la revendication 2, comportant une couche de matière isolante en feutre de fibres minérales, caractérisée en ce que la largeur ($b_1$) de la première bande de rive (4) est d'environ 50 mm et la largeur ($b_2$) de l'autre bande de rive (5) est d'environ 100 mm.

4. Procédé pour fabriquer une nappe de matière isolante suivant au moins une des revendications 1 à 3, selon lequel on commence par fabriquer une couche de matière isolante en continu puis on la munit d'une nappe de parement, caractérisé en ce que la coupure est formée en continu dans la couche de matière isolante, à l'endroit prévu de la zone de rive de la couche de matière isolante, en amont de l'endroit d'application du parement, par séparation complète de la bande de rive associée et la bande de rive séparée est à nouveau appliquée centre la zone médiane de la couche de matière isolante par juxtaposition complète des faces de coupe de la coupure avant l'application de la nappe de parement.

5. Procédé suivant la revendication 4 selon lequel la couche de matière isolante en feutre de fibres minérales fabriquée en continu est rognée et le cas échéant coupée en nappes partielles d'une largeur nominale souhaitée, caractérisé en ce que la coupe est pratiquée au cours du rognage et/ou de la division de la couche de matière isolante en forme de nappe.

6. Procédé suivant la revendication 4 ou 5, caractérisé en ce que la coupe est pratiquée à l'aide d'un jet d'eau sous haute pression.

7. Procédé suivant l'une quelconque des revendications 4 à 6, caractérisé en ce que le serrage de la bande de rive séparée est assuré par des tôles de guidage obliques qui attaquent les bandes de rive entre l'endroit de coupe et l'endroit d'application du parement.

## Patentansprüche

1. Dämmstoffbahn, insbesondere aus Mineralfaserfilz, mit einer aufgeklebten Kaschierung als Sperrschicht (2) und zur Befestigung der Dämmstoffbahn an Randbegrenzungen, wie Dachsparren, zwischen denen die Dämmstoffschicht herstellerseitig eingebrachten, randparallelen und die Kaschierung nicht verletzenden Einschnitt (7 oder 8) zur Bildung eines modularen, leichten entfernbaren Randstreifens (4 oder 5) zur Anpassung der Breite der Dämmstoffschicht (1) an die jeweiligen Einbauerfordernisse, dadurch gekennzeichnet, daß der Einschnitt (7 oder 8) über die ganze Höhe der Dämmstoffschicht (1) reicht, daß die Schnittflächen des Einschnittes (7 oder 8) geschlossen aneinanderliegen und daß die Klebstoffschicht (9) zwischen der Kaschierungsbahn (2) und der Dämmstoffschicht (1) auch an dem durch den Einschnitt (7 oder 8) abgeteilten Randstreifen (4 oder 5) vorgesehen ist.

2. Dämmstoffbahn nach Anspruch 1, dadurch gekennzeichnet, daß die durch beidseitig angeordnete Einschnitte (7, 8) gebildeten Randstreifen (4 und 5) in beiden Randbereichen der Dämmstoffschicht (1) unterschiedliche modulare Breiten ($b_1$, $b_2$) aufweisen.

3. Dämmstoffbahn nach Anspruch 2, mit einer Dämmstoffschicht aus Mineralfaserfilz, dadurch gekennzeichnet, daß die Breite ($b_1$) des ersten Randstreifens (4) etwa 50 mm und die Breite ($b_2$) des anderen Randstreifens (5) etwa 100 mm beträgt.

4. Verfahren zur Herstellung einer Dämmstoffbahn nach wenigstens einem der Ansprüche 1 bis 3, bei dem zunächst eine Dämmstoffschicht kontinuierlich gefertigt und sodann mit einer Kaschierungsbahn versehen wird, dadurch gekennzeichnet, daß der Einschnitt an der vorgesehenen Stelle des Randbereichs der Dämmstoffschicht vor der Kaschierungsstelle durch vollständige Abtrennung des zugehörigen Randstreifens kontinuierlich gebildet wird und der abgetrennte Randstreifen unter vollständiger Schließung der Schnittflächen des Einschnitts wieder an den Mittelbereich der Dämmstoffschicht angelegt wird, bevor die Kaschierungsbahn aufgebracht wird.

5. Verfahren nach Anspruch 4, bei dem die kontinuierlich gefertigte Dämmstoffschicht aus Mineralfaserfilz besäumt und gegebenenfalls in Teilbahnen einer gewünschten Nennbreite geschnitten wird, dadurch gekennzeichnet, daß der Einschnitt im Zuge der Besäumung und/oder der Teilung der bahnförmigen Dämmstoffschicht eingebracht wird.

6. Verfahren nach Anspruch 4 oder 5, dadurch gekennzeichnet, daß der Einschnitt mit Hilfe eines Hochdruckwasserstrahls eingebracht wird.

7. Verfahren nach einem der Ansprüche 4 bis 6, dadurch gekennzeichnet, daß die Andrückung des abgetrennten Randstreifens durch schräggestellte Leitbleche erfolgt, welche die Randstreifen zwischen der Schnittstelle und der Kaschierungsstelle beaufschlagen.

## Claims

1. Sheet of insulating material, in particular of mineral fibre felt, comprising a facing which is glued to it as a barrier layer (2) and means for fixing the sheet to elements which form the boundaries to the edges, such as roof rafters, between which the layer of insulating material (1) may be installed under lateral pressure, at least one cut (7 or 8) being made by the manufacturer in the region of the lateral edge of the layer of insulating material in a direction parallel to said edge and without cutting into the facing, so as to form a modular edge strip (4 or 5) which can easily be removed to facilitate adapting the width of the layer of insulating material (1) to the particular requirements of the installation, characterised in that the cut (7 or 8) passes through the whole height of the layer of insulating material (1), the cut surfaches of the cut (7 or 8) are juxtaposed against one another, and the layer of adhesive (9) between the sheet of facing (2) and the layer of insulating material (1) is also provided on the edge strip (4 or 5) which is separated by the cut.

2. Sheet of insulating material according to claim 1, characterised in that the edge strips (4 and 5) formed by the cuts (7, 8) on the two sides have different modular widths ($b_1$, $b_2$) in the two edge zones of the layer of insulating material (1).

3. Sheet of insulating material according to claim 2, comprising a layer of insulating material of mineral fibre felt, characterised in that the width ($b_1$) of the first edge strip (4) is approximately 50 mm and the width of the other edge strip (5) is approximately 100 mm.

4. Process for manufacturing a sheet of insulating material according to at least one of claims 1 to 3, according to which a layer of insulating material is first produced continously and the layer is then provided with a sheet of facing, characterised in that the cut is made continuously in the layer of insulating material in the region of the edge strip of the layer of insulating material, upstream of the position where the facing is applied, by complete separation of the edge strip in question, and the edge strip which has been separated is again applied against the middle zone of the layer of insulating material by completely juxtaposing the cut surfaces of the cut before the sheet of facing is applied.

5. Process according to claim 4, according to which the continuously produced layer of insulating material of mineral fibre felt is trimmed and, if required, cut up into partial or separate sheets of the desired width, characterised in that the cut is made in the course of the trimming and or subdivision of the layer of insulating material in the form of a sheet.

6. Process according to claim 4 or claim 5, characterised in that the cut is made with the aid of a jet of water under high pressure.

7. Process according to one of claims 4 to 6, characterised in that the seperated edge strip is secured by means of oblique guide plates which grip the edge strips between the place where the cut is made and the place where the facing is applied.